# EUROPÄISCHE PATENTSCHRIFT

(11) **EP 2 150 726 B1**
(45) Veröffentlichungstag und Bekanntmachung des Hinweises auf die Patenterteilung: **08.12.2010**
(21) Anmeldenummer: 08735622.6
(22) Anmeldetag: 31.03.2008
(51) Int. Cl.: F16H 7/12

(54) **EXZENTER-SPANNVORRICHTUNG**
ECCENTRIC TENSIONING DEVICE
DISPOSITIF TENDEUR À EXCENTRIQUE

(30) Priorität: 25.04.2007 DE 202007005950 U; 08.06.2007 US 760005
(43) Veröffentlichungstag der Anmeldung: 10.02.2010
(73) Patentinhaber: Schaeffler Technologies GmbH & Co. KG, 91074 Herzogenaurach (DE)
(72) Erfinder: FLÄMIG, Niels, 91093 Hessdorf (DE); ARNETH, Roland, 91330 Eggolsheim (DE); BAUMÜLLER, Rainer, 91074 Herzogenaurach (DE)
(86) Internationale Anmeldenummer: PCT/EP2008/053836
(87) Internationale Veröffentlichungsnummer: WO 2008/132003

(56) Entgegenhaltungen:
- EP-A- 1 696 217
- DE-A1-102004 009 129

## Beschreibung

### Gebiet der Erfindung

Die vorliegende Erfindung bezieht sich auf eine Exzenter-Spannvorrichtung zur Spannung eines beispielsweise als Flach- oder Zahnriemen ausgeführten Zugmittels eines Zugmitteltriebs. Insbesondere bezieht sich die Erfindung hierbei auf eine zur Einbindung in einen Zugmitteltrieb einer Brennkraftmaschine vorgesehene Exzenter-Spannvorrichtung welche durch ein seitens einer Federeinrichtung generiertes Nachstellmoment selbsttätig eine geforderte Vorspannung des Zugmittels sicherstellt und die vor Einbindung in den Zugmitteltrieb in einem vorgespannten Montagezustand bereitgehalten werden kann. Eine solche Exzenterspannvorrichtung ist aus der gattunsgemäβen DE 10 2004009129A bekannt.

Eine Spannvorrichtung der vorgenannten Art ist beispielsweise auch aus DE 40 33 777 Al bekannt. Diese herkömmliche, auch als Doppelexzenter-Spannvorrichtung bezeichnete Spannvorrichtung umfasst einen Einstellexzenter, der über eine außermittig angeordnete, zur Aufnahme einer Befestigungsschraube vorgesehene Bohrung verfügt. Mittels der Befestigungsschraube wird die Spannvorrichtung an einem Gehäuse, insbesondere einem Gehäuse der Brennkraftmaschine befestigt, wobei der Einstellexzenter über eine Grundplatte an dem Gehäuse abgestützt ist. Auf diesen Einstellexzenter ist ein Arbeits- oder Betriebsexzenter aufgesetzt, wobei in einem Ringspalt zwischen einer Mantelfläche des Einstellexzenters und einer Innenwandung des Betriebsexzenters ein Gleitlager vorgesehen ist. Außenseitig umschließt ein Wälzlager den Betriebsexzenter, dessen Außenring unmittelbar als Laufscheibe fungiert, die als solche in verbautem Zustand, d.h. im Betriebszustand auf dem Zugmittel des Zugmitteltriebs aufsitzt und dieses dabei mit einer quer zur Laufrichtung gerichteten Querkraft beaufschlagt. Zur Erzielung einer kraftschlüssigen Anlage der Laufscheibe an dem Zugmittel ist zwischen der Grundplatte und dem Betriebsexzenter eine Torsionsfeder angeordnet, die den Betriebsexzenter und die damit in Verbindung stehende Laufscheibe permanent in eine das Zugmittel spannende Position drängt.

Der Erfindung liegt die Aufgabe zugrunde, Lösungen zu schaffen durch welche eine Spannvorrichtungen in vorteilhafter Weise in einen vorgespannten Montagezustand verbracht werden kann.

Diese Aufgabe wird erfindungsgemäß gelöst durch eine Exzenterspannvorrichtung mit den merkmalen des Anspruchs 1.

Dadurch wird es auf vorteilhafte Weise möglich, eine Spannvorrichtung zu schaffen bei welcher ohne Demontage des Einstellexzenters die Lagerzapfeneinrichtung stirnseitig mit einer der axialen Verlagerung des Arbeitsexzenters gegenüber der Führungszapfeneinrichtung dienenden Axialkraft beaufschlagt werden kann. Hierdurch wird es möglich eine durch Entriegelung der Fixiereinrichtung ausgelöste Spannvorrichtung in vorteilhafter Weise in einen vorgespannten Montagezustand zu verbringen und hierbei zu montagegerecht zu rekonfigurieren.

Vorzugsweise ist am Arbeitsexzenter in einem zur Stirnseite der Spannvorrichtung freiliegenden Bereich eine Eingriffsausnehmung ausgebildet in welche ein zur Einleitung eines Rückstellmomentes geeignetes Werkzeug einführbar ist. Diese Eingriffsausnehmung kann insbesondere als Hohlprisma ausgeführt sein und dabei beispielsweise einen Sechskant- oder Torxquerschnitt aufweisen.

Die Durchführungseinrichtung kann als Durchgangsöffnung oder zum Umfangsrandbereich des Bords hin offene Ausnehmung ausgeführt sein. Die Durchführungseinrichtung kann so gestaltet sein, dass durch diese im wesentlichen kein Zutritt von Verunreinigungen zu den Bewegungsflächen des Arbeitsexzenters erfolgen kann. Hierzu ist es möglich, axial oder radial verlagerbare Abdeckorgane vorzusehen, oder Elastomerelemente im Bereich der Durchführungseinrichtung anzuordnen durch welche der Durchführungsbahnraum nach Abschluss der Rekonfigurierung der Spannvorrichtung wieder verschlossen wird.

Gemäß einer besonders bevorzugten Ausführungsform der Erfindung ist es möglich, in der Durchführungseinrichtung ein Zapfenelement vorzusehen über welches von der Stirnseite des Einstellexzenters aus Stellkräfte auf die Stirnseite der Lagerzapfeneinrichtung übertragen werden können.

Gemäß einer besonders bevorzugten Ausführungsform der Erfindung ist die Fixiereinrichtung derart ausgebildet, dass diese im Wege des Festziehens der Befestigungsschraube, durch welche als solche die Exzenter-Spannvorrichtung, insbesondere der Einstellexzenter derselben an die, die Spannvorrichtung tragende Anflanschfläche aufgeschraubt wird, selbsttätig löst. Dieser automatische Löse- bzw. Freischaltvorgang der Fixiereinrichtung kann dabei insbesondere eingeleitet werden, indem unter Wirkung der durch die Befestigungsschraube aufgebrachten Axialkraft im Rahmen der Anbindung der Exzenter-Spannvorrichtung an die Anflanschfläche von Komponenten der Spannvorrichtung ein Freischaltweg überfahren bzw. ein in der Spannvorrichtung bereitgestelltes axiales Spiel beseitigt wird. Im Wege der Beseitigung dieses axialen Spiels, insbesondere entgegen einer durch die Torsionsfeder, aufgebrachten Axialkraft kann eine Eingriffsstruktur der Fixiereinrichtung in einen Freigabezustand verbracht werden.

Die Rekonfigurierung einer ausgelösten Spannvorrichtung in den Ausgangzustand kann erfindungsgemäß erfolgen, indem der Arbeitsexzenter durch einen an diesem angreifenden, Schlüssel entgegen der durch die Torsionsfeder veranlassten Schwenkrichtung zurückgeschwenkt wird und bei Erreichen der Rückschwenkstellung über die Durchführungseinrichtung die Lagerzapfeneinrichtung vom Bord des Einstellexzenters axial abgedrängt wird.

Die Erfindung richtet sich insbesondere auf Spannvorrichtungen, die eine nahezu konstante Vorspannkraft des Zugmittels unter auslegungsrelevanten Betriebsbedingungen sicherstellen.

Weitere Einzelheiten und Merkmale der Erfindung ergeben sich aus der nachfolgenden Beschreibung in Verbindung mit der Zeichnung. Es zeigt:
- Figur 1: eine Axialschnittdarstellung zur Veranschaulichung des Aufbaus einer erfindungsgemäßen Spannvorrichtung mit einem Betrieb- sexzenter und einem Einstellexzenter sowie einer erfindungsge- mäßen Fixiereinrichtung;
- Figur 2: eine Detail-Schemadarstellung zur Veranschaulichung einer Va- riante der erfindungsgemäßen Spannvorrichtung mit einem in die Durchtrittsausnehmung eingesetzten Stiftelement,
- Figur 3: eine perspektivische Darstellung der Exzenter-Spannvorrichtung gemäß Figur 1 mit Blick auf die Unterseite einer Grundplattenein- richtung der Exzenter-Spannvorrichtung;
- Figur 4: eine weitere perspektivische Darstellung der Exzenter- Spannvorrichtung zur Veranschaulichung einer besonderen Ab- stimmung der Geometrie des Einstellexzenters und der Ein- griffsausnehmung des Arbeitsexzenters, sowie auch zur Veran- schaulichung der Freischaltwege.

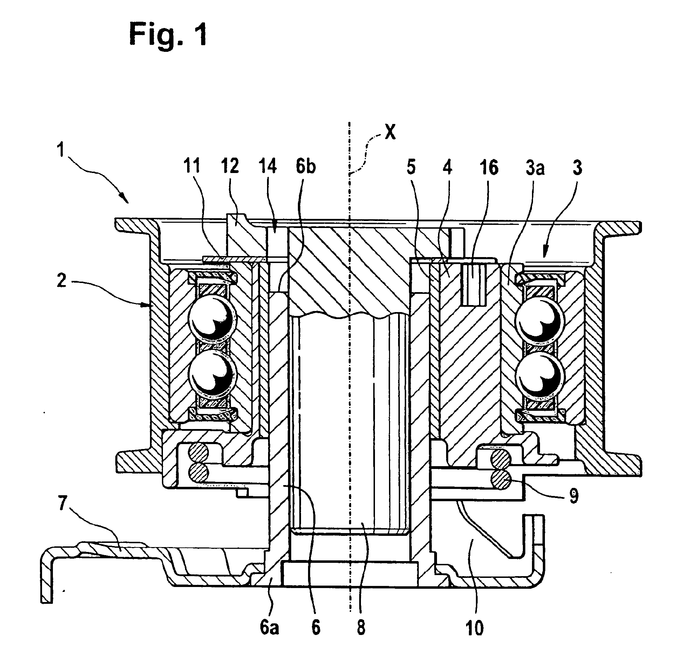

Die in Figur 1 dargestellte Exzenter-Spannvorrichtung dient als solche der Spannung eines als Flach-, insbesondere Zahnriemen ausgeführten Zugmittels eines Zugmitteltriebes. Diese Exzenter-Spannvorrichtung umfasst eine Laufrolleneinrichtung 1, die als solche eine Laufscheibe 2 und ein zur Lagerung derselben vorgesehenes, hier als zweireihiges Rillenkugellager ausgeführtes Wälzlager 3 umfasst. Das Wälzlager 3 umfasst einen Innenring 3a, der als solcher auf einem um eine Exzenterachse X schwenkbewegbaren Arbeitsexzenter 4 sitzt.

Der Arbeitsexzenter 4 wiederum sitzt unter Zwischenschaltung einer Gleitlagerbuchse 5 auf einer, hier als Buchse ausgeführten, Lagerzapfeneinrichtung 6. Die Lagerzapfeneinrichtung 6 wiederum ist mit einem unteren Umfangsrandabschnitt 6a an einer Grundplattenstruktur 7 verankert. In der Lagerzapfeneinrichtung 6 sitzt ein als Einstellexzenter 8 fungierendes Exzenterelement.

Die hier dargestellte Exzenter-Spannvorrichtung ist derart gestaltet, dass deren Arbeitsexzenter 4 gegenüber der Grundplattenstruktur 7 in einer Schwenkstellung arretierbar ist, in welcher eine zur Generierung des Nachspanndrehmomentes vorgesehene Torsionsfeder 9 vorgespannt ist. Die Sicherung des Arbeitsexzenters 4 in dieser Schwenkposition wird durch eine Fixiereinrichtung 10 bewerkstelligt, die bei diesem Ausführungsbeispiel eine einstückig mit der Grundplattenstruktur 7 ausgeführte Eingriffsstruktur aufweist, die mit einer entsprechend an dem Arbeitsexzenter 4 ausgebildeten Gegenstruktur in dieser Schwenkstellung in Eingriff bringbar ist.

Bei dem in Figur 1 dargestellten Systemzustand der Exzenter-Spannvorrichtung handelt es sich um einen so genannten Montagezustand, d.h. einen Zustand in welchem die Exzenter-Spannvorrichtung an eine Anflanschfläche angesetzt werden kann und in welchem sich ein relativ großer Abstand der Laufscheibeneinrichtung 1 von dem in Betriebsstellung erreichten Laufpfad des zu spannenden Zugmittels ergibt. Dieser spezielle Montagezustand erlaubt es, das zur Realisierung eines entsprechenden Zugmitteltriebes vorgesehene Zugmittel relativ einfach auf die Laufscheiben des Zugmitteltriebes aufzulegen ohne dass diese Auflegearbeit hierbei durch die Exzenter-Spannvorrichtung gestört wird.

Die hier gezeigte Exzenter-Spannvorrichtung ist derart ausgebildet, dass der Vorspannzustand des Arbeitsexzenters aufgehoben wird indem im Rahmen der endgültigen Befestigung der Exzenter-Spannvorrichtung eine zur Anbindung des Einstellexzenters 8 an eine hier nicht näher dargestellte Anflanschfläche vorgesehene Befestigungsschraube angezogen wird und hierbei den Einstellexzenter 8 gemeinsam mit dem über eine Anlaufscheibeneinrichtung 11 daran anstehenden Arbeitsexzenter 4 zur Grundplattenstruktur 7 hin verlagert wird. Im Rahmen dieser Verlagerung wird ein Freischaltweg überwunden, wodurch die Fixiereinrichtung 10 in einen Freigabezustand gelangt, in welchem der Arbeitsexzenter 4 unter Wirkung der Torsionsfedereinrichtung 9 geschwenkt wird und damit die Laufscheibeneinrichtung 1 gegen das zugeordnete Zugmittel drängt.

Die hier dargestellte Exzenter-Spannvorrichtung zeichnet sich dadurch aus, dass der Einstellexzenter 8 einen den Arbeitsexzenter 4 zumindest teilweise radial übergreifenden Bord 12 aufweist. Über diesen Bord 12 ist der Arbeitsexzenter 4 in verbautem Zustand axial gesichert. Im Bereich des Bords ist eine Durchtrittsausnehmung 14 ausgebildet, durch welche ein Stirnbereich 6b der Lagerzapfeneinrichtung 6 zur Aufbringung einer die Lagerzapfeneinrichtung 6 gegenüber dem Arbeitsexzenter 4 axial verlagernden Stellkraft zugänglich ist.

Durch dieses Konzept wird es möglich, eine bereits durch Freischaltung der Fixiereinrichtung 10 entsicherte Spannvorrichtung wieder zu rekonfigurieren und dabei den Arbeitsexzenter 4 wieder in einer der Montagestellung entsprechenden Schwenk- und Axialposition zu fixieren. Die Aufbringung der auf die Stirnseite 6b der Lagerzapfeneinrichtung 6 wirkenden Druckkraft kann durch Betätigungselemente erfolgen, die als solche im Rahmen der Rekonfigurierung der Exzenter-Spannvorrichtung durch die Durchtrittsausnehmung 14 hindurchgeführt werden.

Das Zurückschwenken des Arbeitsexzenters 4 kann erfolgen indem in eine in dem Arbeitsexzenter 4 ausgebildete Eingriffsausnehmung 16 ein beispielsweise als Inbusschlüssel ausgeführter Schlüssel eingesteckt wird und über diesen Schlüssel ein den Arbeitsexzenter 4 in die Vorspannstellung zurückschwenkendes Schwenkmoment eingeleitet wird. Dieser Inbusschlüssel kann Teil eines Spezialwerkzeuges bilden, das als solches einen Ausrückmechanismus und damit auch das zum Durchtritt durch die Durchtrittsausnehmung 14 vorgesehene Betätigungsorgan umfasst.

Die Eingriffsausnehmung 16 befindet sich in dem Arbeitsexzenter 4 an einer Stelle, an welcher dieser eine relativ große Wanddicke aufweist. Es ist möglich, den Bord 12 im Schwenkbereich der Eingriffsausnehmung 16 radial verkürzt auszubilden, sodass hier ein ausreichender Zugang zu der Eingriffsausnehmung 16 gegeben ist.

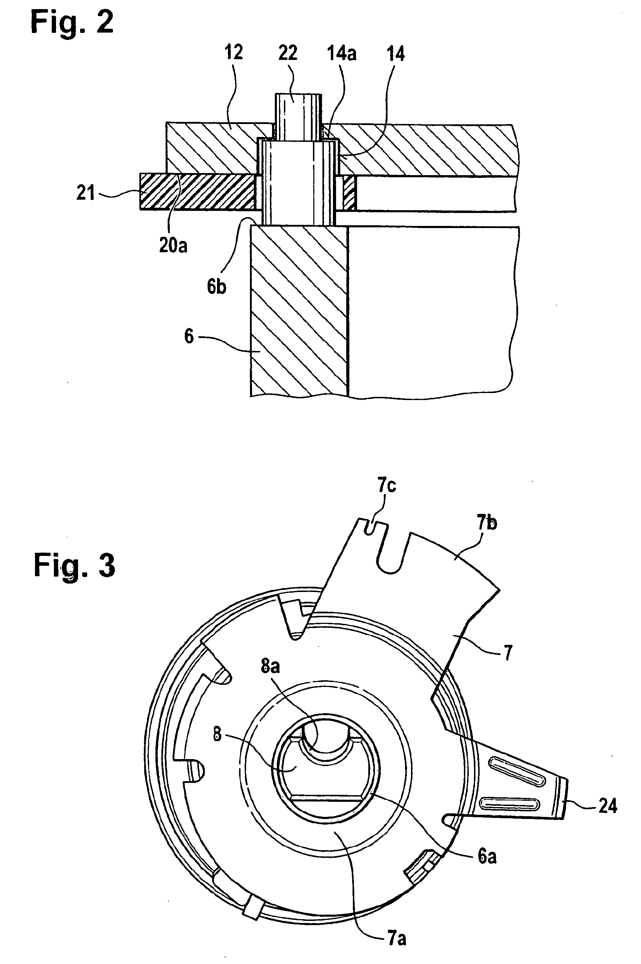

In Figur 2 ist in Form einer Schemadarstellung veranschaulicht, wie in die in dem Bord 12 ausgebildete Durchtrittsausnehmung 14 ein Stiftelement 22 eingesetzt werden kann, das als solches die Durchtrittsausnehmung 14 an sich verschließt, jedoch die Übertragung einer auf die Stirnseite 6b der Lagerzapfeneinrichtung 6 wirkenden Axialkraft ermöglicht.

Bei dem hier gezeigten Ausführungsbeispiel befindet sich zwischen der Stirnseite 6b der Lagerzapfeneinrichtung 6 und der Unterseite 20a des Bords 12 eine als Dämpfungselement fungierende Anlaufscheibe 21. Diese Anlaufscheibe 21 ist vorzugsweise so gestaltet, dass zumindest in einer bestimmten Schwenkstellung des Arbeitsexzenters 4 diese einen Durchtritt des Stiftes 22 ermöglicht. Der Stift 22 ist bei diesem Ausführungsbeispiel derart gestuft ausgebildet, dass dieser über eine an der Durchtrittsausnehmung 14 ausgebildete Ringschulter 14a gegen Herausfallen aus der Durchtrittsausnehmung 14 gesichert ist. Es ist auch möglich, den Stift 22 anderweitig gegen Verlieren zu sichern. Insbesondere ist es möglich, den Stift 22 auch an die Anlaufscheibe 21 anzubinden.

In Figur 3 ist in Form einer perspektivischen Ansicht von unten die Grundplattenstruktur 7 der Exzenter-Spannvorrichtung dargestellt. An der Grundplattenstruktur 7 ist ein Innenumfangsrandabschnitt ausgebildet, an welchem ein Fußbereich 6a der Lagerzapfeneinrichtung 6 starr und drehfest verankert ist. Wie in dieser Darstellung erkennbar, sitzt in der Lagerbuchseneinrichtung 6 der Einstellexzenter 8. Dieser Einstellexzenter 8 ist mit einer Längsausnehmung 8a versehen, die als solche der Aufnahme einer zur Anbindung der Spannvorrichtung an eine Anflanschfläche vorgesehene Befestigungsschraube dient. An der Grundplattenstruktur 7 ist ein Ansatz 24 ausgebildet, durch welchen die Grundplattenstruktur 7 an der entsprechenden Anflanschfläche drehfest verankerbar ist. An der Grundplattenstruktur 7 ist weiterhin ein radial nach außen auskragender Armabschnitt 7b ausgebildet, in welchem eine hier als kleine Ausnehmung 7c ausgeführte Markierung ausgebildet ist.

Die erfindungsgemäß gestaltete Spannvorrichtung kann in besonders vorteilhafter Weise unter Verwendung eines Kombinationswerkzeuges rekonfiguriert werden. Dieses Kombinationswerkzeug umfasst dabei vorzugsweise einen mit dem Arbeitsexzenter in Eingriff bringbaren Steckschlüsselabschnitt und einen zur axialen Verlagerung der Lagerzapfeneinrichtung 6 vorgesehenen Ausrückfinger. Dieser Ausrückfinger kann bei entsprechendem Ansetzen des Montagewerkzeuges durch die Durchtrittsausnehmung 14 hindurchtauchen oder zumindest auf ein in der Durchtrittsausnehmung 14 angeordnetes Übertragungselement wirken. Um den Zahnriemenspanner wieder in seinen Anlieferungszustand zu bringen, werden durch das Vorspannwerkzeug vorzugsweise mehrere Vorgänge durchgeführt. Durch das Montagewerkzeug wird insbesondere der Arbeitsexzenter in seine Montagestellung geschwenkt. Hierzu wird mit Hilfe des Werkzeugs der Arbeitsexzenter mit einem entsprechenden Drehmoment beaufschlagt. Dieses Drehmoment wird durch ein formschlüssig an dem Arbeitsexzenter eingreifendes Bauteil des zenter eingreifendes Bauteil des Vorspannwerkzeuges, insbesondere durch einen Inbusschlüssel in den Arbeitsexzenter eingeleitet. Bei dem hier gezeigten Ausführungsbeispiel ist in dem Arbeitsexzenter ein Innensechskant ausgebildet, um den Inbus des Vorspannwerkzeuges aufzunehmen.

Wenn sich der Arbeitsexzenter in der Montageschwenkstellung befindet, wird eine Relativbewegung zwischen der Lagerzapfeneinrichtung und dem Arbeitsexzenter herbeigeführt. Damit diese zur axialen Verlagerung der vorgenannten Komponenten geeignete Schwenkposition des Arbeitsexzenters erkennbar ist, ist an der Grundplattenstruktur eine Markierung angebracht. Um die Relativbewegung zwischen Bolzen und Arbeitsexzenter auszuführen, drückt beispielsweise das Vorspannwerkzeug mittels eines Stiftes auf die lagerzapfen-oder Bolzenstirnseite. Um auf den Bolzen drücken zu können, ist eine Durchtrittsausnehmung in dem Einstellexzenter derart ausgebildet, dass ein Zugang zum Bolzen entsteht. Um Wassereintritt in die Lagerung zu verhindern, kann diese Durchtrittsöffnung nachträglich durch ein Stopfen verschlossen werden. Es kann auch an der Anlaufscheibe eine Vorrichtung vorgesehen werden, die sich nach Herausziehen des Stiftes der sich am Montagewerkzeug befindet, wieder verschließt.

Weiterhin ist es möglich, in den Einstellexzenter, wie vorangehend in Verbindung mit Figur 2 beschrieben, einen Stift einzubinden, der an sich formschlüssig gegen Herausfallen gesichert ist und über die Relativbewegung zwischen Bolzen und Arbeitsexzenter ausgeführt wird. Dieser Stift kann auch durch eine flexible Anbindungsstruktur mit der Anlaufscheibe oder dem Einstellexzenter gekoppelt sein, sodass die an sich formschlüssige Sicherung dieses Stiftes gegen Herausfallen entfallen kann. Durch den Stift wird zumindest das Ausmaß von potentiellem Feuchtigkeitszutritt in die Gleitlagerung verringert. Zwischen Stift und Einstellexzenter kann eine Druckfeder eingesetzt sein, die den Stift gegen die Stellfläche des Bolzens drückt. Wenn sich der Arbeitsexzenter in Arbeitsposition befindet, tritt das Stiftoberteil vollständig aus dem Einstellexzenter heraus.

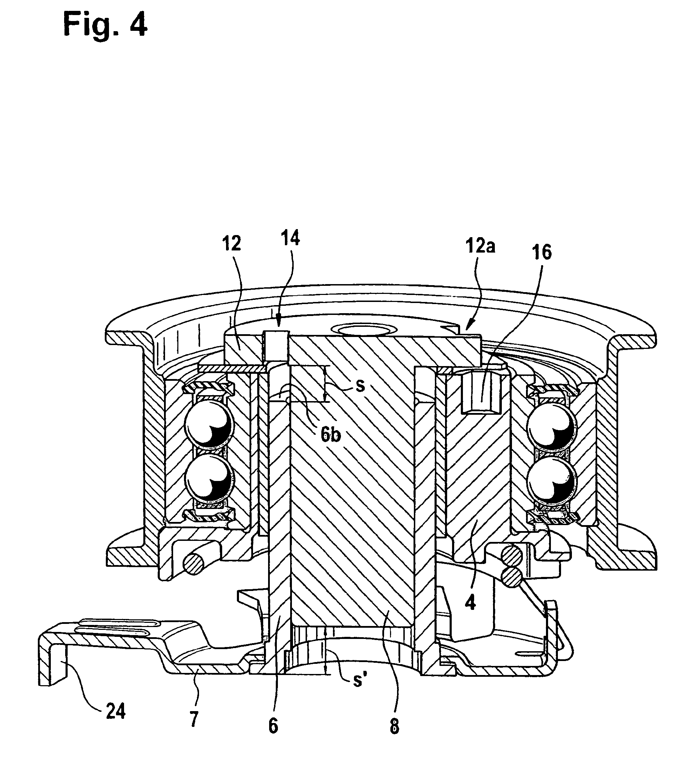

In Figur 4 ist in Form einer weiteren perspektivische Darstellung eine besonderen Abstimmung der Geometrie des Einstellexzenters 8, insbesondere des Bords 12 desselben auf die Eingriffsausnehmung 16 des Arbeitsexzenters 4 veranschaulicht. Der Bord 12a ist an einer bestimmten Umfangsposition mit einer Ausnehmung 12a versehen. Diese Ausnehmung 12a ist so gestaltet und angeordnet, dass bei Einführen eines Schlüssels, insbesondere Inbusschlüssels in die Eingriffsausnehmung 16 durch diesen Schlüssel eine kinematische Koppelung des Einstellexzenters 8 mit dem Arbeitsexzenter 4 erreicht wird. Wird nunmehr infolge eines auf den Schlüssel aufgebrachten Drehmomentes der Arbeitsexzenter 4 geschwenkt, so fungiert der Schlüssel als Mitnehmer durch welchen auch der Einstellexzenter 8 geschwenkt wird. Durch dieses Konzept wird es auf besonders vorteilhafte Weise möglich, eine Konfiguration der Spannvorrichtung herbeizuführen in welcher sich ein für den Montagezustand optimaler Schwenkwinkel des Arbeitsexzenters 4 und des Einstellexzenters 8 gegenüber dem Mitnehmer 24 der Grundplatte 7 ergibt.

In der Darstellung nach Figur 4 ist weiterhin auch die hier im Querschnitt rechteckig ausgeführte Durchführungseinrichtung 14 dargestellt. Über diese Durchführungsöffnung wird es möglich, die Stirnseite 6b des Lagerzapfens 6 über ein Ausrückorgan zu belasten und damit den hier erkennbaren Axialversatz s herbeizuführen. In der hier gezeigten Position befindet sich der Arbeitsexzenter 4 bereits in einem Verriegelungszustand mit einer seitens der Grundplatte 7 bereitgestellten Arretiereinrichtung. Dieser Verriegelungszustand kann durch axiale Verlagerung des Einstellexzenters 8 in Richtung zur Grundplatte 7 hin, aufgehoben werden. Der Axialversatz s, d.h. der Abstand zwischen der Stirnseite 6b und der Unterseite des Bords 12 kann so bemessen sein, dass dieser geringfügig kleiner ist als der Abstand s' zwischen der Unterseite des Einstellexzenters 8 und der Unterseite der Grundplatte 7. Hierdurch wird sichergestellt, dass in verbautem Zustand unter Wirkung einer Befestigungsschraube der Bord 12 auf der Stirnfläche 6b aufsitzt und damit die Grundplatte 7 gegen die entsprechende Anflanschfläche spannt.

Obgleich bei den vorangehend beschriebenen Ausführungsbeisielen der Bord 12 des Einstellexzenters 8 integral mit dem Einstellexzenter 8 ausgeführt ist, ist die Erfindung nicht auf derartige Varianten beschränkt. Es ist auch möglich, den Einstellexzenter 8 als aus mehreren Teilen zusammengesetzte Struktur zu fertigen und beispielsweise den Bord 12 als Scheibenstruktur auszuführen die auf einen Kernzapfenabschnitt des Einstellexzenters 8 aufgesetzt ist.

## Patentansprüche

1. Exzenterspannvorrichtung für einen Zugmitteltrieb, mit:
- einer Laufrolleneinrichtung (1) die als solche eine Laufscheibe (2) und ein zur Lagerung derselben vorgesehenes Wälzlager (3) umfasst,
- einem Arbeitsexzenter (4) zur Abstützung der Laufrolleneinrichtung (1) derart, dass diese nach Maßgabe eines Schwenkens des Arbeitsexzenters (4) in einer zur Umlaufachse des Wälzlagers (3) radialen Richtung verlagerbar ist,
- einer Lagerzapfeneinrichtung (6) zur Lagerung des Arbeitsexzenters (4),
- einer Torsionsfeder (9) zur Vorspannung des Arbeitsexzenters (4),
- einer Fixiereinrichtung (10) zur Sicherung des Arbeitsexzenters (4) in einer Montageposition in welcher die Torsionsfeder (9) sich in einem vorgespanntem Zustand befindet, und der Arbeitsexzenter (4) gegenüber dem Lagerzapfen (6) axial in eine Fixierposition verlagert ist, und
- einem Einstellexzenter (8) zur Lagerung der Lagerzapfeneinrichtung (6), wobei der Einstellexzenter (8) einen die Lagerzapfeneinrichtung (6) auf einer, einer Anflanschseite abewandten Stirnseite radial übergreifenden Bord (12) aufweist und **dadurch gekennzeichnet, dass** im Bereich dieses Bords (12) eine Durchtrittsausnehmung (14) ausgebildet ist durch welche ein Stirnbereich der Lagerzapfeneinrichtung (6) zur Aufbringung einer die Lagerzapfeneinrichtung (6) gegenüber dem Arbeitsexzenter (4) axial verlagernden Stellkraft zugänglich ist.

2. Exzenterspannvorrichtung nach Anspruch 1, **dadurch gekennzeichnet, dass** die Durchtrittsausnehmung (14) als den Bord (12) axial durchsetzende Durchgangsöffnung ausgeführt ist.

3. Exzenterspannvorrichtung nach Anspruch 1 oder 2, **dadurch gekennzeichnet, dass** die Lagerzapfeneinrichtung (6) als Buchsenelement ausgebildet ist, und dass die Durchtrittsausnehmung (14) auf die Stirnfläche (6b) des Buchsenelements führt.

4. Exzenterspannvorrichtung nach Anspruch 3, **dadurch gekennzeichnet, dass** in die Durchtrittsausnehmung (14) ein Zapfenelement (22) eingesetzt ist.

5. Exzenterspannvorrichtung nach Anspruch 4, **dadurch gekennzeichnet, dass** das Zapfenelement (22) durch eine Verliersicherung in der Durchtrittsausnehmung (14) gesichert ist.

6. Exzenterspannvorrichtung nach Anspruch 5, **dadurch gekennzeichnet, dass** das Zapfenelement (22) an eine Reibscheibe (21) angebunden ist die als solche an der Unterseite des Bords (12) ansteht.

7. Exzenterspannvorrichtung nach wenigstens einem der Ansprüche 1 bis 6, **dadurch gekennzeichnet, dass** der Arbeitsexzenter (4) mit einer Angriffseinrichtung versehen ist, zur Einleitung eines der Rekonfigurierung in den Montagezustand dienenden Rückstelldrehmomentesmomentes.

8. Exzenterspannvorrichtung nach Anspruch 7, **dadurch gekennzeichnet, dass** die Angriffseinrichtung als zur Aufnahme eines Steckschlüssels geeignete Ausnehmung (16) gestaltet ist.

9. Exzenterspannvorrichtung nach Anspruch 8, **dadurch gekennzeichnet, dass** sich die Ausnehmung (16) in einem relativ dickwandigen Bereich des Arbeitsexzenters (4) befindet.

10. Exzenterspannvorrichtung nach wenigstens einem der Ansprüche 1 bis 9, **dadurch gekennzeichnet, dass** die Lagerzapfeneinrichtung (6) an eine Grundplattenstruktur (7) angebunden ist, und dass an der Grundplattenstruktur (7) eine Markierung (7c) ausgebildet ist durch welche erkennbar ist, ob sich der Arbeitsexzenter (4) in einer Vorspannstellung befindet.

## Claims

1. Eccentric tensioning apparatus for a flexible drive, having:
- a running-roller device (1) which per se comprises a running plate (2) and an anti-friction bearing (3) which is provided for mounting it,
- a working eccentric (4) for supporting the running-roller device (1) in such a way that, according to a pivoting motion of the working eccentric (4), this can be displaced in a radial direction with respect to the circulating axis of the anti-friction bearing (3),
- a bearing-journal device (6) for mounting the working eccentric (4),
- a torsion spring (9) for prestressing the working eccentric (4),
- a fixing device (10) for securing the working eccentric (4) in an assembly position, in which the torsion spring (9) is situated in a prestressed state, and the working eccentric (4) is displaced with respect to the bearing journal (6) axially into a fixing position, and
- a setting eccentric (8) for mounting the bearing-journal device (6), the setting eccentric (8) having a rim (12) which reaches radially over the bearing-journal device (6) on an end side which faces away from a flanging-on side, and **characterized in that** a passage recess (14) is formed in the region of this rim (12), through which passage recess (14) an end region of the bearing-journal device (6) is accessible for applying a setting force which displaces the bearing-journal device (6) axially with respect to the working eccentric (4).

2. Eccentric tensioning apparatus according to Claim 1, **characterized in that** the passage recess (14) is configured as a through opening which penetrates the rim (12) axially.

3. Eccentric tensioning apparatus according to Claim 1 or 2, **characterized in that** the bearing-journal device (6) is configured as a bush element, and **in that** the passage recess (14) leads onto the end face (6b) of the bush element.

4. Eccentric tensioning apparatus according to Claim 3, **characterized in that** a journal element (22) is inserted into the passage recess (14).

5. Eccentric tensioning apparatus according to Claim 4, **characterized in that** the journal element (22) is secured by a captive securing means in the passage recess (14).

6. Eccentric tensioning apparatus according to Claim 5, **characterized in that** the journal element (22) is attached to a friction disc (21) which per se is present on the underside of the rim (12).

7. Eccentric tensioning apparatus according to at least one of Claims 1 to 6, **characterized in that** the working eccentric (4) is provided with an acting device, for introducing a restoring torque which serves for reconfiguration into the assembly state.

8. Eccentric tensioning apparatus according to Claim 7, **characterized in that** the acting device is designed as a recess (16) which is suitable for receiving a socket wrench.

9. Eccentric tensioning apparatus according to Claim 8, **characterized in that** the recess (16) is situated in a relatively thick-walled region of the working eccentric (4).

10. Eccentric tensioning apparatus according to at least one of Claims 1 to 9, **characterized in that** the bearing-journal device (6) is attached to a base-plate structure (7), and **in that** a marking (7c) is formed on the base-plate structure (7), by way of which marking (7c) can be detected whether the working eccentric (4) is situated in a prestressed position.

## Revendications

1. Dispositif tendeur à excentrique pour un entraînement de mécanisme de traction, avec
- un dispositif à galets (1), qui comprend comme tel une jante (2) et un roulement (3) prévu pour supporter celle-ci;
- un excentrique de travail (4) pour supporter le dispositif à galets (1) de telle manière que celui-ci puisse être déplacé dans une direction radiale par rapport à l'axe de rotation du roulement (3) en fonction d'un pivotement de l'excentrique de travail (4);
- un dispositif de tourillon (6) pour supporter l'excentrique de travail (4);
- un ressort de torsion (9) pour précontraindre l'excentrique de travail (4);
- un dispositif de fixation (10) pour fixer l'excentrique de travail (4) dans une position de montage dans laquelle le ressort de torsion (9) se trouve dans un état précontraint, et l'excentrique de travail (4) est déplacé dans une position de fixation axialement par rapport au tourillon (6); et
- un excentrique de réglage (8) pour supporter le dispositif de tourillon (6), dans lequel l'excentrique de réglage (8) présente un rebord (12) dépassant radialement le dispositif de tourillon (6) sur un côté frontal situé à l'opposé d'un côté de bridage,
et **caractérisé en ce que**, dans la région de ce rebord (12), est formé un évidement de passage (14) à travers lequel une région frontale du dispositif de tourillon (6) est accessible pour l'application d'une force de réglage déplaçant axialement le dispositif de tourillon (6) par rapport à l'excentrique de travail (4).

2. Dispositif tendeur à excentrique selon la revendication 1, **caractérisé en ce que** l'évidement de passage (14) est réalisé sous la forme d'une ouverture de passage traversant axialement le rebord (12).

3. Dispositif tendeur à excentrique selon la revendication 1 ou 2, **caractérisé en ce que** le dispositif de tourillon (6) se présente sous la forme d'un élément de douille, et **en ce que** l'évidement de passage (14) conduit sur la face frontale (6b) de l'élément de douille.

4. Dispositif tendeur à excentrique selon la revendication 3, **caractérisé en ce qu'**un élément de tourillon (22) est introduit dans l'évidement de passage (14).

5. Dispositif tendeur à excentrique selon la revendication 4, **caractérisé en ce que** l'élément de tourillon (22) est fixé dans l'évidement de passage (14) par un système de protection contre la perte.

6. Dispositif tendeur à excentrique selon la revendication 5, **caractérisé en ce que** l'élément de tourillon (22) est assemblé à un disque de friction (21), qui est dressé comme tel sur le côté inférieur du rebord (12).

7. Dispositif tendeur à excentrique selon au moins l'une des revendications 1 à 6, **caractérisé en ce que** l'excentrique de travail (4) est muni d'un dispositif d'attaque, pour l'introduction d'un couple de rappel servant à la reconfiguration dans l'état de montage.

8. Dispositif tendeur à excentrique selon la revendication 7, **caractérisé en ce que** le dispositif d'attaque est réalisé sous la forme d'un évidement (16) destiné à recevoir une clé à douille.

9. Dispositif tendeur à excentrique selon la revendication 8, **caractérisé en ce que** l'évidement (16) se trouve dans une région relativement épaisse de l'excentrique de travail (4).

10. Dispositif tendeur à excentrique selon au moins l'une des revendications 1 à 9, **caractérisé en ce que** le dispositif de tourillon (6) est assemblé à une structure de plaque de base (7), et **en ce qu'**un marquage (7c) est réalisé sur la structure de plaque de base (7), à l'aide duquel on peut voir si l'excentrique de travail (4) se trouve dans une position précontrainte.
